# EUROPEAN PATENT APPLICATION

(11) **EP 4 557 589 A1**
(43) Date of publication of application: **21.05.2025**
(21) Application number: 23210602.1
(22) Date of filing: 17.11.2023
(51) Int. Cl.: H02K 15/02, B32B 37/12

(54) **METHOD AND TOOL FOR MANUFACTURING A LAMINATED CORE OF AN ELECTRIC MACHINE**

(71) Applicant: Ford Global Technologies, LLC, Dearborn, MI 48126 (US)
(72) Inventor: Koch, Raphael, 51519 Odenthal (DE); Bai, Yun, Canton, MI 48187 (US)
(74) Representative: Markowitz, Markus

(57) **Abstract**

The invention generally relates to a method (64) and a tool (10) for manufacturing a laminated core (12) of an electric machine. At least one metal sheet (20) is provided. At least one fluidic component (32) is applied on at least one portion of at least one side (24, 26) of the at least one metal sheet (20) using at least one applicator (28) employing an inkjet printing technique. At least one blank (42) of the at least one metal sheet (20) including the at least one fluidic component (32) is die cut. Multiple blanks (42) are aligned with regard to each other for forming the laminated core (12).

## Description

The invention generally relates to a method and a tool for manufacturing a laminated core of an electric machine.

Nowadays, cores of electric machines usually comprise stacks of multiple laminated metal sheets (n>100 laminations) which are at least partially electrically isolated with regard to each other since eddy currents can be damped thereby. For producing these stacks of metal sheets, various joining methods for the core manufacturing are known. Widely, "interlocking" is used for assembling the metal sheets, whereby the separately stamped laminations are connected using stamped "push button" features. A different manufacturing approach makes use of welding which is also a common method for joining adjacent laminations. In addition, there is also an approach, where steel sheets are pre-coated with an adhesive which is only required to be activated during or after the stamping process.

However, utilizing these joining technologies, the electrical insulation of the electrical steel (so-called e-steel) metal sheets is at least partially removed within the joining areas. This causes eddy currents to occur at least to some extent. Thereby, power dissipation is increased (mainly due to additional eddy current losses) which reduces the efficiency of the respective electric machines.

An alternative approach makes use of adhesive bonding techniques which is applied for the stacking and bonding of adjacent steel sheets so as to establish laminated cores for rotors and stators of the electric machine. Since removing of the electrical insulation can be omitted as to the adhesive bonding, power dissipation is low such that the efficiency of the respective electric machines is high. Furthermore, there are noise, vibration, and harshness benefits, because the adhesion covers large areas compared to the (spatially limited) interlocking features and the weld lines.

However, within these manufacturing techniques, commonly a continuous metal sheet is provided from which individual blanks of the laminations are die cut. For preparing the metal sheet accordingly, a priming is applied to the metal sheet such that the bonding is strengthened. This results in a large waste usage of priming material since the entire continuous metal sheet is prepared in this way.

In addition, the number of available adhesives as well as companies providing adhesive bonding procedures are limited. This potentially may cause delays in the manufacturing procedures if an adhesive is not available or if the production facility is out of business, e.g., due to maintenance work. Straightforwardly, this also causes delays in the production of the entire electric machine comprising the respective stator or rotor core which ultimately may cause delays in the manufacturing of vehicles comprising such electric machines.

US 2019/0028006 A1, US 2018/0056629 A1, and EP 3 902 112 A1 disclose generic methods for producing laminated cores where adhesives are applied for bonding adjacent laminations.

Accordingly, there is a need for a method and a tool for manufacturing a laminated core of an electric machine which enable the variety of the manufacturing procedures to be enhanced while also enabling waste reduction to be achieved. Moreover, the operating efficiencies if the respectively manufactured cores which are used in the underlying electric machines shall be high.

The subject matter of the independent claims satisfies the respective need. Further embodiments are indicated within the dependent claims and the following description, each of which, individually or in combination, may represent aspects of the disclosure.

A summary of certain embodiments disclosed herein is set forth below. It should be understood that these aspects are presented merely to provide a brief summary of these embodiments and that these aspects are not intended to limit the scope of this disclosure. This disclosure may encompass a variety of aspects that may not be set forth below. Some aspects are explained in view of methods, others in view of devices. However, the respective aspects are to be correspondingly transferred from methods to devices and vice versa.

According to an aspect, embodiments of the present invention relate to a method for manufacturing a laminated core of an electric machine. The method comprises at least the steps of:
At least one metal sheet is provided.

At least one fluidic component is applied to at least one portion of at least one side of the at least one metal sheet using at least one applicator employing an inkjet printing technique.

At least one blank of the at least one metal sheet including the at least one fluidic component is die cut.

Multiple blanks are aligned with regard to each other for forming the laminated core.

The invention is based on the finding that inkjet printing techniques may be utilized to precisely apply the fluidic components used for establishing the laminated bonding at the desired locations only. Accordingly, portions of the underlying raw material of which the metal sheets are formed and which are not used for establishing the laminations need not be treated with the fluidic component. For example, the consumption of lubricants, which are applied on the metal sheets for a better cutting and less wear, can be decreased. This is achieved since the method enables only those portions of the metal sheet to be treated with the lubricant, which are die cut. Here, the benefits of inkjet printing techniques are made use of. More specifically, compared to existing adhesive application technologies, inkjet printing enables a spatial control at higher resolution to be achieved (micron-meter level). Furthermore, the applied component may also be used as a "sealer" to prevent fluid channels from leaking in between the laminations of the laminated core. Therefore, the consumption of the fluidic material and the waste production are reduced as compared to known methods. In addition, inkjet printing techniques are known to be highly flexible. Therefore, if a manufacturing interruption occurs, a different inkjet printing applicator may be adopted to replace the former, interrupted one. Thereby, a quick recover of the entire manufacturing procedure may be achieved.

According to another aspect, embodiments of the present invention relate to a tool for manufacturing a laminated core of an electric machine. The tool has at least one applicator, a progressive die stage, a die cutting stage, and a control device. The control device is coupled to the at least one applicator, the progressive die stage, and the die cutting stage. The at least one applicator is configured to apply at least one fluidic component to at least one portion of at least one side of at least one metal sheet employing an inkjet printing technique. The progressive die stage is configured to apply stamp features to the at least one metal sheet The die cutting stage is configured to die cut at least one blank of the at least one metal sheet including the at least one fluidic component and to align multiple blanks with regard to each other for forming the laminated core. The tool is configured for carrying out the method as described herein before.

This means that a single combined manufacturing tool (also known as progressive die) is established which may be used to apply the fluidic component, to die cut the blanks, and also to align the multiple blanks with regard to each other such that the respective laminated core is formed. Thus, a compact manufacturing design is achieved. In addition, the advantages reached by the before described method are correspondingly achieved by the herein described tool.

In some embodiments, the at least one fluidic component comprises at least one of a priming and an adhesive. Preferably, the at least one fluidic component can also comprise a priming and an adhesive, which may be separately applied or may be applied within a single fluidic component. Thus, a priming may be applied to establish a strong adhesion of the adhesive to the surface of the metal sheet. For example, the priming may assist in a laminar covering of the surface by the adhesive. In turn, the adhesive establishes the bonding effect between adjacent metal sheets.

Optionally, the at least one fluidic component comprises at least two separate substances being applied by separate printer nozzles. This means that the at least one fluidic component may comprise a two-component substance. The two individual substances may for example comprise a resin (e.g., an epoxy, binder) and a hardener (catalyst). In effect, two-component substances are capable of providing a strong bonding effect such that the structural stiffness of the laminated core is high.

Preferably, the at least one fluidic component is applied to an area of the at least one metal sheet. An amount of the at least one fluidic component varies across the area according to a predetermined spatial pattern. This enables a tailored spatially dependent distribution of the at least one fluidic component according to the respective needs. For example, specific regions of the laminated core may be exposed to increased forces acting thereon during use of the electric machine. Thus, the spatial distribution may be varied such that the local amount of the at least one fluidic component is increased within these regions. Accordingly, the forces which the bonding between adjacent metal sheets can persist may be enlarged due to adapting the spatially varying amount of the at least one fluidic component according to the respective needs.

Optionally, the predetermined spatial pattern may be determined by force models representing the forces acting on the laminated core during use inside an electric machine.

Preferably, the predetermined spatial pattern comprises a resolution of at least 180 dpi with regard to local amounts of the at least one fluidic component. Put differently, according to a resolution of at least 180 dpi different local amounts of the at least one fluidic component may be applied. More preferably, the resolution may be at least 360 dpi, more preferably the resolution may be at least 540 dpi, more preferably the resolution may be at least 720 dpi. In this aspect, the resolution is not required to be uniform across the entire predetermined pattern. Rather, the entire predetermined pattern may also comprise high resolution portions and low resolution portions according to the respective needs. Therefore, the efficiency may be enlarged. Thus, complex predetermined patterns may be contemplated. Notably, such high resolution patterns cannot be obtained with existing spot applicator approaches. Hence, the application of the at least one fluidic component can be tailored to a greatly enlarged level as compared to existing approaches.

According to some embodiments, the at least one metal sheet comprises a continuous piece of metal. Multiple blanks are die cut from the continuous piece of metal. This simplifies the handling during the manufacturing procedure as well as the uniformity thereof. The arrangement of the various stages of the tool may be defined in relation to the continuous piece of metal. The tool may then punch locator holes into the continuous piece of metal in order to align it properly. The continuous piece of metal generally changes its form and shape during the stamping process. Accordingly, the tool is much higher in tolerance in view of the continuous piece of metal. Accordingly, it may be achieved that the different stages are in register with each other. This means that the different stages may treat same portions of the continuous metal sheet as desired since the control device provides the respective transport control of the continuous piece of metal. In addition, a certain number of blanks can be produced from a single piece of metal. As a result, e.g., the material properties of the various blanks may be same or at least show smaller variations as compared to the case of the blanks being formed of different metal pieces.

Preferably, the continuous piece of metal can be transported through the tool using push/pull feeders. In this regard, the control device may be coupled with the push/pull feeders and accordingly control the movement of the continuous piece of metal. For example, an average moving speed of the continuous piece of metal can be adjusted according to the needs.

Preferably, the at least one metal sheet is moved during the application of the at least one fluidic component with an average substrate speed of 0,25 m/sec or more, preferably with an average substrate speed of 0,5 m/sec or more, preferably with an average substrate speed of 1 m/sec or more, more preferably with an average substrate speed of 2 m/sec. Hence, high production rates may be achieved. In this regard, the steel sheet is fed to the tool with a varying speed and only in between the strokes. During the strokes, no material is fed into the tool. In between the strokes, which can be as high as 150-200 strokes/min or more, the material is fed into the tool. Therefore, the applicator is configured to apply the at least one fluidic component even at varying speeds. In particular, the applicator can be configured to apply the at least one fluidic component to be in register with the varying substrate speed between the strokes.

Optionally, at least one mark is applied to the at least one metal sheet by applying the at least one fluidic component. The mark provides at least one of an alignment labelling and an identification labelling to the at least one portion of the at least one metal sheet. This means that the at least one fluidic component is not only configured to establish a bonding between adjacent laminations but also to apply marks (signs) for alignment and identification. So far, alignment marks are applied using specialized drilling or cutting tools or laser scribings. Therefore, current manufacturing techniques show high production expenses. E.g., these specialized tools have to be repeatedly sharpened or exchanged. Since the fluidic component may be utilized to apply the alignment marks, the production expenses can be lowered. Moreover, identification marks may be applied to indicate orientations and/or to establish serial number labeling, e.g., for guaranteeing authenticity of the respective components. Ultimately, each metal sheet of a laminated core may comprise an individual serial number or authenticity mark.

In an alternative, the marks applied to different metal sheets of a laminated core may cooperatively establish an authenticity mark of the entire core. For example, the marks may also be applied to side surfaces which may be inspected from the outside of the core.

In some embodiments, the at least one fluidic component at least partially comprises a color such that the fluidic component is recognizable by a naked human eye under daylight after being applied to the metal sheet. Thus, a production operator may efficiently check whether or not the at least one fluidic component is applied on the at least one metal sheet as desired. Put differently, the monitoring of the manufacturing procedure is simplified.

Alternatively, or cumulatively, the at least one fluidic component may at least partially comprise an ultraviolet or infrared color such that the fluidic component is recognizable using auxiliary detection devices which are capable of detecting ultraviolet or infrared radiation. In this regard, it may be required to excite the radiating particles of the at least one fluidic component. Hence, counterfeiting is hindered.

According to some embodiments, the at least one fluidic component is applied to seal channels of at least one metal sheet and/or channels between adjacent metal sheets of the laminated core. As to the sealing mechanism achieved by the at least one fluidic component, more uniform surfaces may be achieved such that better defined structures are established. Thereby, the uniformity of the laminated core is enhanced. In addition, components arranged inside the channels such as conducting wires or fluids (such as cooling fluids) can be (partially) locked as to the sealing technique. Hence, movement of the objects arranged within the channels can be prevented, at least along certain directions.

Optionally, the at least one fluidic component is hardened for forming the laminated core. As a consequence, after hardening the individual blanks of the core cannot move anymore with regard to each other. Accordingly, the robustness of the core is enlarged.

For hardening the fluidic component, heat, a process gas, or ultraviolet light may be applied as an activator. Additional curing strategies can be contemplated if the at least one fluidic component comprises at least two separate substances, such as a binder and a hardener. The process gas may for example comprise oxygen. Preferably, the at least one fluidic component is hardened by applying heat for a predetermined time period at a predetermined temperature. Thus, a reliable hardening procedure may be established.

In some embodiments, the die cutting stage comprises at least one blanking device. The blanking device is configured to die cut blanks from the at least one metal sheet. The blanks may comprise a predetermined shape. Therefore, the blanking device enables to produce a plurality of blanks of the at least one metal sheet which may comprise similar shapes and may correspond to each other.

Optionally, the at least one applicator is integrated into the progressive die stage establishing a progressive stamping device. Thus, a separate application stage for the applicator may be omitted thereby. Put differently, the tool may have a high level of integration such that it is very compact. This arrangement also assists in the ability to apply the at least one component exactly in the desired areas. Especially for portions having small cross-sectional areas, such as small bridges between cutouts (slots) of the stator or the magnet pockets within the rotor, this arrangement allows a higher precision of the application of the at least one fluidic component to be achieved.

Preferably, the at least one applicator is arranged at a lower part of the tool and/or is at least partially arranged upside down. Thus, the applicator may be arranged according to the respective needs. Arranging the applicator in the lower part of the tool assists in reducing the vibrations and speed modifications during the application of the at least one fluidic component as the upper part of the tool is subjected to larger speed modifications. Therefore, arranging the applicator within the lower part may increase the durability and lifetime of the applicator. Instead, by arranging the applicator in the upper part, the gravitational force assists during the application of the at least one fluidic component. Moreover, arranging the applicator in the upper part of the tool enables the applied fluidic component to be easier evaluated as to its correct placement on the at least one metal sheet.

In some embodiments, the applicator is arranged inside the progressive die stage of the tool. Hence, the applicator may be arranged at different locations in view of the sequence of the different stages of the tool. As a consequence, applying the at least one fluidic component "too early" such that clogging of the tool could occur may be prevented. Put differently, the at least one applicator can be arranged inside the tool at various locations according to the respective needs.

Optionally, the at least one applicator is configured to apply the at least one fluidic component to opposite sides of the at least one metal sheet. For example, the applicator may be arranged (mounted) at the lower part of the tool but may comprise a portion extending to the upper part of the tool such that opposite sides of the at least one metal sheet may be treated with the at least one fluidic component simultaneously. Hence, the production rate can be increased. In addition, reduced vibrations and speed modifications in view of the applicator can also be achieved by this arrangement.

In some embodiments, the at least one applicator is nondestructively removable from the tool. Put differently, the applicator may be interchangeable between various tools. Because of the highly flexible inkjet technology there is no need to equip every tool with its own applicator, but the print head unit (applicator) can be exchanged and placed within the next tool. Hence, the production expenses are low.

Preferably, the at least one applicator comprises at least one print head having multiple printer nozzles arranged on a single side of the at least one metal sheet.

In some embodiments, the applicator may also comprise two sets of printer nozzles, wherein the separate sets are arranged on opposite sides of the at least one metal sheet. Accordingly, fluidic components having several substances can be simultaneously applied to opposite sides of the at least one metal sheet. Therefore, the variability of the tool is enlarged.

The electric machine may be configured to be used inside at least one of ground-based vehicles, such as cars and trucks, aviation related vehicles, rail transport vehicles, shipping, aerospace or consumer goods. Thus, the number of potential applications is high.

The foregoing aspects and further advantages of the claimed subject matter will become more readily appreciated as the same become better understood by reference to the following detailed description when taken in conjunction with the accompanying drawings. In the drawings,
- Fig. 1 is a schematic drawing of a tool for manufacturing a laminated core of an electric machine,
- Fig. 2 is a schematic drawing of a blank for a laminated core of an electric machine, and
- Fig. 3 is a schematic drawing of a method for manufacturing a laminated core of an electric machine.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed. Various modifications to the described embodiments will be readily apparent to those skilled in the art, and the general principles defined herein may be applied to other embodiments and applications without departing from the spirit and scope of the described embodiments. Thus, the described embodiments are not limited to the embodiments shown but are to be accorded the widest scope consistent with the principles and features disclosed herein.

All of the features disclosed hereinafter with respect to the example embodiments and/or the accompanying figures can alone or in any sub-combination be combined with features of the aspects of the present disclosure including features of preferred embodiments thereof, provided the resulting feature combination is reasonable to a person skilled in the art.

For the purposes of the present disclosure, the phrase "at least one of A, B, and C", for example, means (A), (B), (C), (A and B), (A and C), (B and C), or (A, B, and C), including all further possible combinations when greater than three elements are listed. In other words, the term "at least one of A and B" generally means "A and/or B", namely "A" alone, "B" alone or "A and B".

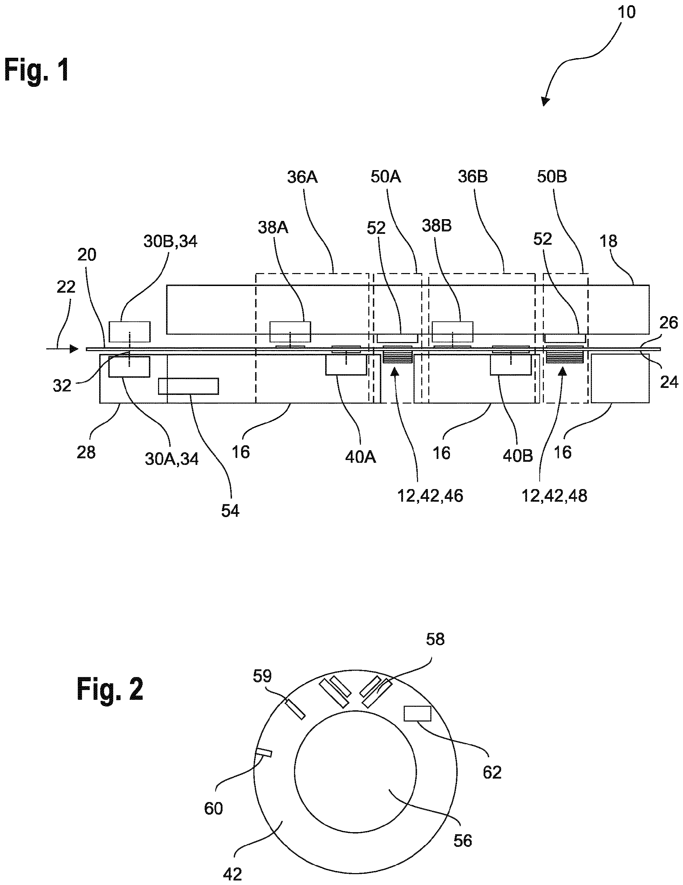

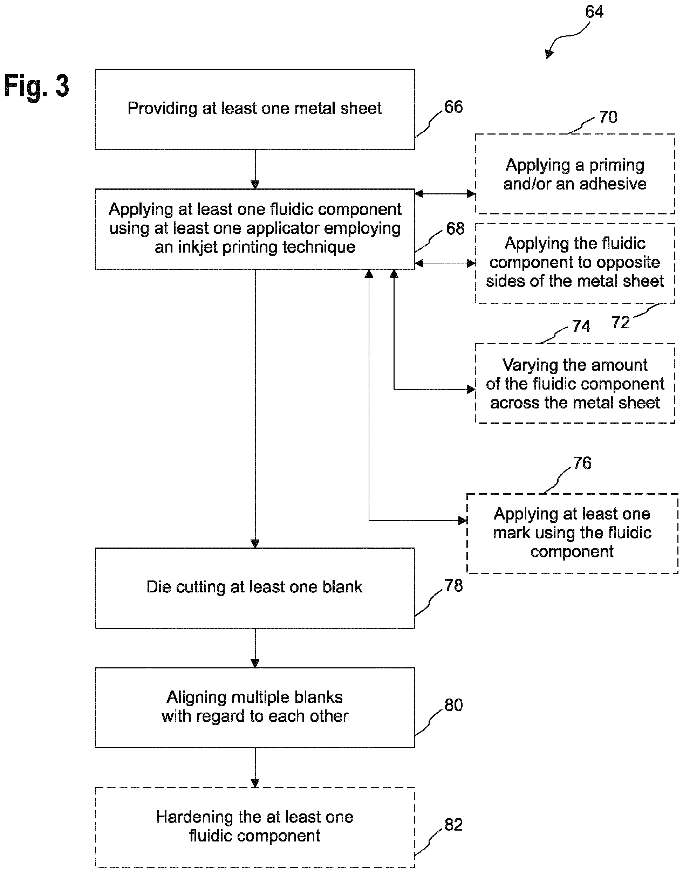

Fig. 1 is a schematic drawing of a tool 10 for manufacturing a laminated core 12 of an electric machine. Within the course of Fig. 1, Fig. 3 is a schematic drawing of a method 64 for manufacturing a laminated core 12 of an electric machine. Optional steps are shown in dashed lines.

The tool 10 comprises a lower part 16 and an upper part 18. According to step 66 of the method 64, a continuous metal sheet 20 is provided. Here, the continuous metal sheet 20 is transported along a predetermined direction 22 through an interior space between the lower part 16 and the upper part 18. The metal sheet 20 comprises a material being adapted for use inside laminated cores 12 of an electric machine, such as electrical steel (also called e-steel). The metal sheet 20 comprises a lower side 24 and an upper side 26. The lower side 24 of the metal sheet 20 faces towards the lower part 16 of the tool 10. The upper side 26 of the metal sheet 20 faces towards the upper part 18 of the tool 10.

The tool 10 comprises an applicator 28. According to the present embodiment, the applicator 28 is arranged at or coupled to the lower part 16 of the tool 10. However, the applicator 28 extends towards the upper part 18 of the tool 10. Accordingly, the applicator 28 comprises two separate print heads 30A, 30B. The first print head 30A is located beneath the lower side 24 of the metal sheet 20 and configured to apply a fluidic component 32 onto the lower side 24 of the metal sheet 20. The second print head 30B is located above the upper side 26 of the metal sheet 20 and configured to apply a fluidic component 32 onto the upper side 26 of the metal sheet 20.

In specific embodiments, the applicator 28 is non-destructively removable from the tool 10. Accordingly, the applicator 28 may be used in a different tool 10 according to the respective needs.

In correspondence with step 68 of the method 64, the applicator 28 is configured to apply the at least one fluidic component 32 to at least one portion of at least one side 24, 26 of the at least one metal sheet 20 employing an inkjet printing technique.

Step 68 may comprise the optional step 70 according to which the fluidic component 32 may comprise a priming and/or an adhesive. Therefore, the fluidic component 32 may serve different purposes.

In addition, since the applicator 28 may at least partially be arranged below and above the metal sheet 20, the step 68 may also comprise the optional step 72 according to which the at least one fluidic component 32 is applied to opposite sides 24, 26 of the at least one metal sheet 20.

Each print head 30 may comprise multiple printer nozzles 34 for applying at least one or multiple fluidic components 32. For example, the fluidic component 32 may comprise individual substances which may be applied by utilizing individual printer nozzles 34.

According to this embodiment, the tool comprises a first progressive die stage 36A and a second progressive die stage 36B. The first progressive die stage 36A is assigned to the rotor laminations manufacturing section. The second progressive die stage 36B is assigned to the stator laminations manufacturing section.

Inside the first progressive die stage 36A and the second progressive die stage 36B, stamp features, such as magnet pockets or a hole for the rotor shaft, may be applied to respective portions of the metal sheet 20.

In addition, alternative positions 38A, 38B, 40A, 40B for arranging the applicator 28 inside the tool 10 are indicated with regard to both the first progressive die stage 36A and the second progressive die stage 36B. Where positions 38A and 40A indicate the applicator 28 to be arranged upside-down (38A) or downside-up (40A) with respect to the rotor laminations manufacturing section, positions 38B and 40B indicate the applicator 28 to be arranged upside-down (38B) or downside-up (40B) with respect to the stator laminations manufacturing section. Hence, the at least one fluidic component 32 can be applied according to the respective needs. Accordingly, the applicator 28 may be arranged such that the at least one fluidic component 32 is not required to be applied to the metal sheet 20 at the very beginning of the tool 10 which would lead to stamping features being applied to a "sticky" portion of the metal sheet. Such stamping actions could cause clogging of the tool 10. Thus, by appropriately positioning the applicator 28, the precision of the stamping and die cutting actions can be kept high.

Downstream of the first progressive die stage 36A and the second progressive die stage 36B, corresponding first and second die cutting stages 50A and 50B are arranged. Each die cutting stage 50A, 50B is configured to die cut respective rotor or stator blanks 42 of the at least one metal sheet 20 including the at least one fluidic component 32.

The method 64 comprises the step 78 of die cutting at least one blank 42 of the at least one metal sheet 20 including the at least one fluidic component 32. In this regard, the first die cutting stage 50A is configured to die cut blanks 42 for a laminated core 12 of a rotor 46. For achieving a predetermined shape of the blanks 42, the first die cutting stage 50A comprises correspondingly shaped upper and lower stamping parts.In effect, several blanks 42 are die cut from the same metal sheet 20 such that the homogeneity of the blanks 42 is enlarged, e.g., with regard to the respective material composition.

The second die cutting stage 50B is configured to die cut blanks 42 for a laminated core 12 of a stator 48.

The homogeneity of the cores 12 can be increased even further by optionally rotating the stacked rotor or stator 46, 48 at every layer or at a predetermined number of layers.

The method 64 also comprises the step 80 in that multiple blanks 42 are aligned with regard to each other for forming the laminated core 12. In this regard, the tool 10 is configured such that the alignment procedure is achieved inside the respective first and second die cutting stages50A,50B. Each die cutting stage 50A, 50B comprises an alignment device 52 which is configured to align multiple blanks 42 with regard to each other so as to form a stack of blanks 42.

The first die cutting stage 50A is configured to establish the laminated core 12 of the rotor 46. The second die cutting stage 50B is configured to establish the laminated core 12 of the stator 48. The die cutting stages 50 are located downstream of the corresponding progressive die stages 36.

The tool 10 also comprises a control device 54. The control device 54 is coupled to at least the applicator 28, the progressive die stages 36, and the die cutting stages 50. The control device 54 may also be coupled to at least one sensor configured to detect a current position of the metal sheet 20.

The control device 54 is configured to alter different operating parameters of the tool 10 during use. For example, step 68 of the method 64 may comprise the optional step 74 according to which an amount of the at least one fluidic component 32 varies across an area of the metal sheet 20 according to a predetermined spatial pattern. The control device 54 may operate the applicator 28 correspondingly so as to guarantee the predetermined spatial pattern. Hence, different local amounts of the fluidic component 32 may be applied to different portions of the metal sheet as, e.g., it may be known that the different portions are exposed to different forces during use of the core 12 inside the electric machine. Thus, the bonding strength between adjacent blanks 42 can be increased as desired. Moreover, the spatial distribution of the fluidic component 32 allows the consumption of the fluidic component 32 to be reduced since portions of the metal sheet 20 not corresponding to the blanks 42 need not be treated with the fluidic component 32, such as particularly in case of multi component fluidic components.

Generally, the metal sheet 20 is transported through the tool 10 using push/pull feeders. The control device 54 may also be coupled to the push/pull feeders such that an average transporting speed of the metal sheet can be adapted. In some embodiments, the applicator 28 is configured to apply the at least one fluidic component 32 such that an average substrate speed of 1 m/sec of the metal sheet 20 relative to the applicator 28 can be achieved inside the tool 10. In addition, since the applicator 28 is coupled to the progressive die stages 36, a progressive stamping device is established.

Usually, the upper part 18 of the tool 10 is moved vertically while the lower part 16 is fixed. Accordingly, the upper part 18 having the upper die cutting parts is exposed to speed modifications. By arranging the applicator 28 so as to be coupled to the lower part 16 of the tool 10, an influence of the speed modifications of the upper part 18 onto the application procedure of the at least one fluidic component 32 by the applicator 28 can be widely suppressed or entirely omitted. Accordingly, a more homogeneous application procedure of the fluidic component 32 is achieved, though the applicator 28 may extend into the upper part 18 of the tool 10 having an upper print head 30B which is located above the upper side 26 of the metal sheet 20.

Optionally, the tool 10 may comprise a separate hardening stage configured to harden the fluidic component 32 according to optional step 82 of the method 64 once the respective core 12 is built up. Thereby, the arrangement of the laminated blanks 42 inside the core 12 can be fixed with regard to each other.

Fig. 2 is a schematic drawing of a blank 42 for a laminated core 12 of an electric machine.

The blank 42 comprises a central cutout 56 for feeding a shaft therethrough. In addition, generally, the blank 42 also comprises multiple specialized cutouts 58 for feeding electric wires therethrough once the core 12 is finished. For simplicity reasons, only a few specialized cutouts 58 are shown here. The specialized cutouts 58 assist in achieving adapted flow paths of the magnetic flux inside the metal sheet 20 piece. The applicator 28 employing an inkjet technique is in particular configured to apply the fluidic component 32 with high precision onto wanted areas of the metal sheet 20, such as narrow metal sheet 20 areas between adjacent specialized cutouts 58 (also called bridge portions). Therefore, the waste of the fluidic component 32 can be reduced since it is applied only to desired portions while a strengthened bonding between adjacent blanks 42 is achieved since the amount of the fluidic component 32 can be modified across the spatial area of the metal sheet 20 corresponding to the blank 42 surfaces.

In some configurations, the fluidic component 32 can also be used to seal channels 59. That way, either cooling fluids or processing fluids (like resin or glue) applied in a downstream production step can be contained. Hence, leakage of such fluids, e.g., into the area between adjacent laminations can be prevented by sealing the channels 59.

Generally, the fluidic component 32 may be configured such that marks 60, 62 may be established on a surface of the blank 42. Put differently, the step 68 of the method 64 may comprise the optional step 76 according to which at least one mark 60, 62 is applied to the at least one metal sheet 20 by applying the at least one fluidic component 32. The mark 60, 62 provides at least one of an alignment labelling and an identification labelling to the at least one portion of the at least one metal sheet 20. For example, the fluidic component 32 may comprise a color in this regard. A first type of mark 60 may be used for alignment purposes such that the alignment of the blanks 42 with regard to each other is simplified. The same or a different type of mark 62 may be used as an identification means for establishing a serial number or the like. Put differently, the second type of mark 62 may assist in guaranteeing authenticity of the blank 42 such that counterfeiting of components of the core 12 is hindered.

In an alternative embodiment, the applicator 28 may also be configured to at least partially apply the fluidic component 32 to an outer surface of the blank 42 which is still recognizable when the core 12 is finished. In this regard, the applicator 28 may be rearranged inside the tool 10 (or another applicator 28 may be provided) such that the respective applicator 28 is arranged downstream of the respective progressive die stage 36.

Certain embodiments disclosed herein, particularly the respective module(s) und/or unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

Although the disclosure has been illustrated and described with respect to one or more implementations, equivalent alterations and modifications will occur to others skilled in the art upon the reading and understanding of this specification and the annexed drawings. In addition, while a particular feature of the disclosure may have been disclosed with respect to only one of several implementations, such feature may be combined with one or more other features of the other implementations as may be desired and advantageous for any given or particular application.

## Claims

1. A method (64) for manufacturing a laminated core (12) of an electric machine, the method (64) comprising at least the steps of:
- providing at least one metal sheet (20),
- applying at least one fluidic component (32) to at least one portion of at least one side (24, 26) of the at least one metal sheet (20) using at least one applicator (28) employing an inkjet printing technique,
- die cutting at least one blank (42) of the at least one metal sheet (20) including the at least one fluidic component (32),
- aligning multiple blanks (42) with regard to each other for forming the laminated core (12).

2. The method (64) of claim 1, wherein the at least one fluidic component (32) comprises at least one of a priming and an adhesive.

3. The method (64) of claim 1 or 2, wherein the at least one fluidic component (32) comprises at least two separate substances being applied by separate printer nozzles (34).

4. The method (64) of any one of the preceding claims, wherein the at least one fluidic component (32) is applied to an area of the at least one metal sheet (20), and wherein an amount of the at least one fluidic component (32) varies across the area according to a predetermined spatial pattern.

5. The method (64) of claim 4, wherein the spatial pattern comprises a resolution of at least 180 dpi with regard to local amounts of the at least one fluidic component.

6. The method (64) of any one of the preceding claims, wherein the at least one metal sheet (20) comprises a continuous piece of metal, and wherein multiple blanks (42) are die cut from the continuous piece of metal.

7. The method (64) of any one of the preceding claims, wherein the at least one metal sheet (20) is moved during the application of the at least one fluidic component (32) with an average substrate speed of 0,25 m/sec or more.

8. The method (64) of any one of the preceding claims, wherein at least one mark (60, 62) is applied to the at least one metal sheet (20) by applying the at least one fluidic component (32), and wherein the mark (60, 62) provides at least one of an alignment labelling and an identification labelling to the at least one portion of the at least one metal sheet (20).

9. The method (64) of any one of the preceding claims, wherein the at least one fluidic component (32) at least partially comprises a color such that the fluidic component (32) is recognizable by a naked human eye under daylight after being applied to the metal sheet (20).

10. The method (64) of any one of the preceding claims, wherein the at least one fluidic component (32) is applied to seal channels (59) of at least one metal sheet (20) and/or channels (59) between adjacent metal sheets (20) of the laminated core (12)

11. A tool (10) for manufacturing a laminated core (12) of an electric machine, the tool (10) having at least one applicator (28), a progressive die stage (36), a die cutting stage (50), and a control device (54), wherein the control device (54) is coupled to the at least one applicator (28), the progressive die stage (36), and the die cutting stage (50),
wherein the at least one applicator (28) is configured to apply at least one fluidic component (32) to at least one portion of at least one side (24, 26) of at least one metal sheet (20) employing an inkjet printing technique, wherein the progressive die stage (36) is configured to apply stamp features to the at least one metal sheet (20),
wherein the die cutting stage (50) is configured to die cut at least one blank (42) of the at least one metal sheet (20) including the at least one fluidic component (32) and to align multiple blanks (42) with regard to each other for forming the laminated core (12), and
wherein the tool (10) is configured for carrying out the method (64) according to any one of the preceding claims.

12. The tool (10) of claim11, wherein the progressive die stage (36) comprises at least one blanking device.

13. The tool (10) of claim 11 or12, wherein the at least one applicator (28) is integrated into the progressive die stage (36) establishing a progressive stamping device.

14. The tool (10) of any one of claims 11 to13, wherein the at least one applicator (28) is arranged at a lower part (16) of the tool (10) and/or is at least partially arranged upside down.

15. The tool (10) of claim 14, wherein the at least one applicator (28) is configured to apply the at least one fluidic component (32) to opposite sides (24, 26) of the at least one metal sheet (20).

16. The tool (10) of any one of claims 11 to15, wherein the at least one applicator (28) is nondestructively removable from the tool (10).

17. The tool (10) of any one of claims 11 to 16, wherein the at least one applicator (28) comprises at least one print head (30) having multiple printer nozzles (34) arranged on a single side (24, 26) of the at least one metal sheet (20).
